# EUROPEAN PATENT APPLICATION

(11) **EP 1 549 014 A2**
(43) Date of publication of application: **29.06.2005**
(21) Application number: 04029723.6
(22) Date of filing: 15.12.2004
(51) Int. Cl.: H04L 29/06, G06F 3/12

(54) **System and method for providing document services**

(30) Priority: 18.12.2003 US 737973
(71) Applicant: Xerox Corporation, Rochester, New York 14644 (US)
(72) Inventor: Ciriza, Victor, 38240 Meylan (FR)
(74) Representative: Grünecker, Kinkeldey, Stockmair & Schwanhäusser Anwaltssozietät

(57) **Abstract**

A printer is adapted to offer web services to users through a print request. The printer includes gateway functionality for providing rapid and secure access to document services offered by document service providers. A service registry, which may be a registry operated by the manufacturer of the printer, manages the list of document service providers.

## Description

### BACKGROUND OF INVENTION

The present invention relates generally to a method and apparatus for providing document services, and more particularly, to a method for using printing systems as an interface for providing document services.

Generally in the information technology field, services offered by service providers on server computers, operating for example on networks such as the Internet, may be queried and requested from client computers (e.g., users) over the computer networks. By requesting a service, the clients obtain results directly or indirectly from the service provider. The results may, for example, involve transforming input data and/or querying a database.

One class of services is known as web services. A server computer may offer a web service to a client computer over a network with information exchanges that are based on the Hyper Text Transfer Protocol (HTTP). Such information exchanges may include extensible Markup Language (XML) formalized messages (e.g., SOAP, UDDI, WSDL, etc). In addition, the Universal Description Discovery and Integration (UDDI) protocol provides developers of web services with facilities for searching service registries for web services. Furthermore, existing development frameworks such as Java and .NET, provide web service developers with tools and software necessary to readily develop web services without having to be concerned with the protocols and formal standards used to carry out information exchanges.

Advantageously, these existing web services platforms enable the sale of software and services using, for example, a pay-per-use transaction model. Even if pay-per-use sales transaction model generally requires a high transaction rate to be profitable, such transaction models benefit from other efficiencies by, for example, not necessarily requiring alternate channels of distribution. Nevertheless, even environments that use the pay-per-use sales transaction model, web service providers may benefit from additional channels of distribution that allow users to become aware of the existence of the service itself.

One category of web services particularly well suited for the pay-per-use sales transaction model are document services, which may include services for authoring, translating, summarizing, enriching, transforming, syntactically analyzing, and semantically analyzing documents. Documents may, for example, be submitted to a document service provider via an HTTP transfer in which the document is wrapped in an XML envelope containing the document itself and the service request with the options specified by the user. The document can be then processed remotely and the result returned via a web interface and/or a mail gateway.

While electronic printing systems are used to process and transform electronic documents into hardcopy renderings, they are not adapted to be used as a facility from which document services may be accessed. Thus, while physical printing systems exist for carrying out one type of document service (i.e., hardcopy renderings of electronic documents), such systems do not have a framework for providing access to additional document services. Accordingly, it would be desirable to provide a printing system that is adapted to offer hardcopy document services and in addition access to services offered by service providers for processing electronic documents. Further it would be advantageous if document services made available at the printing system may be trusted services (e.g., services that a user of the printing system may trust to be provided with some expected level of quality, confidentiality, and timeliness).

### SUMMARY OF INVENTION

In accordance with the invention there is provided in a wide area network coupling a first local area network having a service registry coupled thereto, a second local area network having a service provider coupled thereto, and a third local area network having a user operating a computer coupled thereto, a method, system and article of manufacture therefor, for administering document services offered by the service provider to the user operating the computer.

In accordance with one aspect of the invention, a printer is coupled to the third local area network (i.e., user network). In one embodiment, the printer has gateway functionality embedded therein (i.e., referred to herein as a "gateway printer") to couple the wide area network and the third local area network. The printer registers with the service registry when the printer is a trusted printer of the service registry.

In accordance with another aspect of the invention, the service registry is queried by the printer for document service providers that are registered with the service registry. The registered document service providers define a list of available service providers that includes at least the service provider on the second local area network. The list of available service providers together with details of available services that includes at least the service provider on the second local area network are stored in a cache at the printer.

In accordance with yet another aspect of the invention, when the printer receives a print request that identifies a document to be printed, the user is presented with the list of the available services for augmenting the print request that are stored in the cache of the printer. The print request is received at the printer, augmented with a service selected from the list of available services to perform on the identified document. The printer carries out the augmented print request by communicating with the service provider on the second network that provides the selected service.

In accordance with yet a further aspect of the invention, there is provided a method, apparatus and article of manufacture therefor, for facilitating trusted access to document services. The method includes enabling a printing system to communicate with a service registry. One or more service providers that each offer a set of document services are registered at the service registry. Responsive to receiving a product registration from the printing system at the service registry, the printing system is issued a digital certificate having a public key associated therewith. Responsive to receiving a request for available service providers and verifying the request is from the printing system using the public key, access is provided to the set of document services and the public keys of the each of the one or more service providers. Each of the one or more service providers is issued a digital certificate having a public key associated therewith and the public key of the printing system. The printing system provides access through print requests to ones of the set of document services using ones of the public keys of the one or more service providers that validate access using the public key of the printing system.
In one embodiment of the method of claim 1 the service registry defines the list of available service providers according to functions available at the gateway printer.
In a further embodiment the printer queries the service registry for updates to the list of available service providers.
In a further embodiment the printer is a virtual printer operating on a server.
In a further embodiment the virtual printer is a print server.
In a further embodiment the method further comprises coupling the wide area network and the third local area network with a gateway.
In a further embodiment the method further comprises embedding functionality of the gateway in the printer.
In a further embodiment the printer is a virtual printer operating on a server.
In a further embodiment the virtual printer is a print server.
In a further embodiment the printer controls network bandwidth consumed by print requests.
In a further embodiment the printer is a proxy service for providing information related to the list of available services to users of the third local area network.
In a further embodiment the method further comprises:
coupling the wide area network and the third local area network with a gateway;
embedding functionality of the gateway and the proxy service in the printer.

### BRIEF DESCRIPTION OF DRAWINGS

These and other aspects of the invention will become apparent from the following description read in conjunction with the accompanying drawings wherein the same reference numerals have been applied to like parts and in which:

Figure 1 illustrates an operating environment for carrying out the present invention;

Figure 2 is a flow diagram of operations performed in one embodiment by the gateway printer shown in Figure 1 in carrying out a document service print request; and

Figure 3 illustrates a user interface for accessing the document services available from the gateway printer shown in Figure 1.

### DETAILED DESCRIPTION

### A. Operating Environment

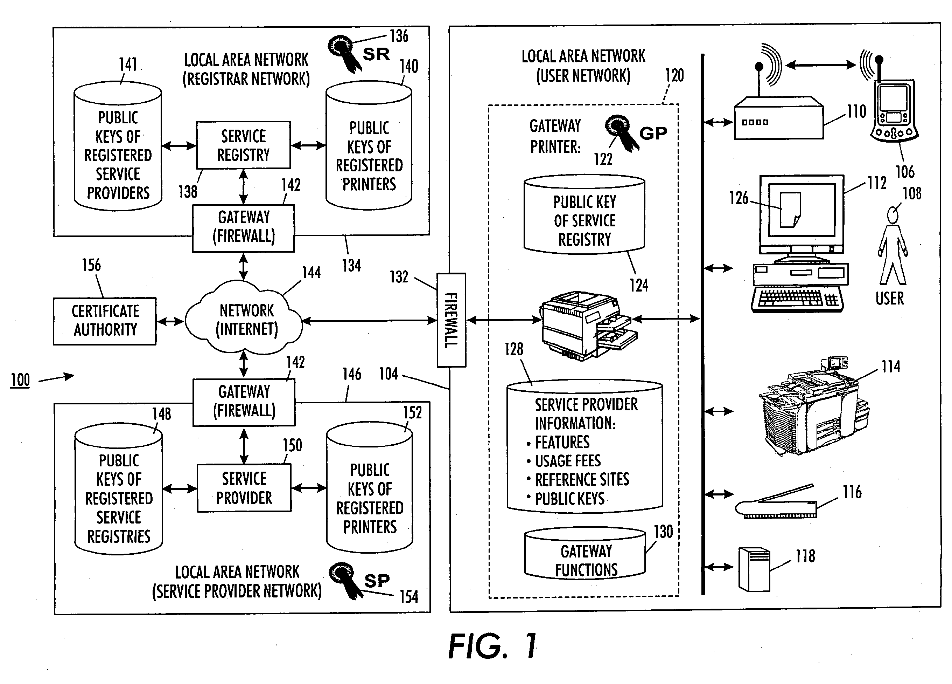

Figure 1 illustrates an operating environment 100 for carrying out the present invention. The operating environment 100 is one in which a user 108 may be a fully or partially authenticated registered user (e.g., having a defined set of access rights) of local area network 104, otherwise referred to herein as the "user network" 104. The user 108 may have, for example, access rights to access, at user workstation 112 (or at mobile device 106 through network access point 110), file server 118 (adapted to store in the user's directories documents such as electronic document 126), multifunction device 114 (e.g., scanner, facsimile, printer, binder) or gateway printer 120 directly or indirectly through print server 118. The print server is adapted to spool print requests from user 108 operating, for example, mobile device 106, workstation 112, or scanner 116, to which one or more printers are directly or indirectly coupled. The user network 104 may for example be a private network such as corporate or home intranet, or a semi-private network such as an airport or a commercial center.

The user network 104 is coupled to a wide area network 144, such as the Internet, to which one or more service registries 138 and one or more service providers 150 are directly or indirectly coupled. In the operating environment 100, user network 104 is coupled to one or more registrar networks 134 and one or more service provider networks 146 by a wide area network 144 that may, for example, be an insecure public network such as the Internet. More generally, the wide area network 144 as defined herein is any network that is used to couple the printer gateway 120 with the service registry 138 and the service provider 150. The wide area network 144 may bridge the networks 104, 134, and 146 using a dedicated land, cellular, or satellite connection. Access from the networks 134 and 146 to the wide area network 144 is made through their respective gateways 142 that may have associated therewith a firewall. Generally, firewalls are used to limit access to/from the wide area network 144 from/to a local area network. In so limiting access, firewalls are generally configured to permit access to the wide area network 144 from inside their local area networks using standard protocols such as HTTP.

### A.1 Service Providers

In the operating environment 100, there may exist one or more service providers 150 that provide services for processing documents in electronic form. The document services available at the one or more service providers 150 include any number of electronic document services such as a translation service, a summarization service, a format conversion service (e.g., an optical character recognition (OCR) service), a recommender service, a messaging service (e.g., emailing, SMS, and faxing), archival service, a document search and location service, and an enrichment service.

One or more document service request may be chained together as a workflow using a document service request workflow as described in U.S. Patent Application Serial No. 10/605,874, which is incorporated herein by reference. Generally, the service provider(s) 150 will produce output in a generic file format that may, for example, be in an application and/or device dependent or independent format. That is, document service requests may be defined as unitary processes for consuming an input file having a specified file type and producing an output file have a specified file type. In addition, such unitary document services may be chained or linked together, thereby defining a set of services that are applied to a single input document. The user may specify through for example a print driver user interface, functions for saving, restoring, and/or configuring sequences of chained unitary document processes that start from one departure point but may terminate at one or more end points.

More specifically regarding the document service requests, the translation service may translate a document from one language to another using well known machine translation systems. The summarization service may summarize document content using one of a plurality of well-known methods. The recommender service may provide recommendations using a recommender system such as Knowledge Pump developed by Xerox Corporation. The enrichment service may be provided by a meta-document management system as described in U.S. Patent Application Serial No. 09/543,962, which is incorporated herein by reference. The document search and location service may provide the services disclosed in U.S. Patent Application Serial No. 10/605,630, which is incorporated herein by reference. The format conversion service may be adapted to convert a document in a first format to a second format. The first format may for example be in a device or application independent format and the second format in a device or application dependent format.

In one embodiment, the service provider 150 records in a memory a digital certificate 154 that uniquely identifies the service provider 150, public keys 148 of one or more service registries 138 at which the service provider 150 is registered as being adapted to provide a list of one or more document services, and public keys of registered printers 152. In one embodiment, the public keys of the printers 152 are provided by the service registry 138 to allow the service provider 150 to be able to trust the identity of the gateway printer 120 for which it intends to perform a requested document service. In another embodiment, the public keys of the gateway printers 152 are requested from (or verified by) the service registry 138 by the service providers 150 at the time the service providers 150 receive a document service request from the gateway printers 120 (which may include its public key or a hint thereto).

In an alternate embodiment, the service providers 150 may offer one or more physical document services such as printing and binding. For example, the gateway printer 120 may have functionality sufficient for printing only black and white documents and therefore a request at the printer to print in color will initiate a document service offering by a service provider as described in detail below.

### A.2 Service Registry

The service registry 138 provides one or more gateway printers 120 and one or more service providers 150 a central location at which to identify and register, respectively, document services. In one embodiment, the service registry 138 records a digital certificate 136, public keys of registered service providers 141, and public keys of registered printers 140. In one embodiment, different service registry(s) 138 are limited to registering certain classes and/or brands of printers (or more generally physical document processing devices, e.g., scanners, printers, binders, or multifunction devices incorporating two or more individual functions).

The service registry 138 serves two principle registration functions: (a) product registration, and (b) document service registration. Product registration concerns the registration of gateway printers 122. Document service registration concerns the registration of service providers 150. In one embodiment, the service registry 138 issues the gateway printer 120 a digital certificate 122 once product registration has completed. In another embodiment, the digital certificate is embedded in the gateway printer's hardware (if a physical device), and which is activated once product registration completes. In yet another embodiment, the digital certificate is stored in a host computer's certificate registry operating a virtual gateway printer (with or without gateway functions, e.g., as a virtual print driver) on the user network 104

In one embodiment, the service registry 138 operates in accordance with Service Oriented Architectures (SOAs), which defines interactions between clients and servers for providing access to and the publication of document services through for example the Hyper-Text Transfer Protocol (HTTP). The SOAs identifies three main roles, that of requestor, registry, and provider. The requestor role (e.g., performed by the printer gateway 120) is a device that searches for a document services (i.e., a "find" interaction) and makes requests to perform a document service (i.e., a "bind" interaction). The registry role (e.g., performed by the service registry 138) is responsible for making services visible (i.e., the "publish" interaction) for potential requests. The provider role (e.g., performed by the service provider 150) publishes available services, receives and/or performs document service inquiries and requests.

### A.3 Gateway Printers

In one embodiment of the invention, the gateway printer 120 provides physical document services (e.g., scanning, printing, stapling, binding, etc.). In an alternate embodiment, the gateway printer 120 is a virtual printer (similar to the print server 118) that provides access to physical document services offered by other devices offering such services to which it is communicatively coupled. In either embodiment, the gateway printer 120 has a memory or cache for storing a digital certificate 122, a public key of the service registry 124, and service provider information 128. The service provider information 128 includes features of services offered by the service providers, fees associated with the use of the services offered, Web sites that offer descriptions of the services and/or fees (which are referred to herein as reference sites), and their public keys.

In the embodiment shown in Figure 1, the gateway printer 120 includes gateway functions 130 for acting as a gateway between user network 104 and wide area network 144. The gateway printer 130 may be protected with a firewall 132. In alternate embodiments, the user network 104 may be coupled to the wide area network 144 without a firewall or the firewall may be embedded in the gateway printer 120. In yet another embodiment, the gateway printer 120 does not include gateway functions 130 and operates independent from a network's gateway and/or firewall.

Regardless of the particular embodiment, the gateway printer 120 provides access to document services made available by one or more service providers 150. In addition and depending on the embodiment and/or configuration of the gateway printer 120, it may be adapted to (a) manage a document service request to be carried out at a service provider 150 for an identified document 126, (b) fetch, cache, and respond to queries from users concerning service provider information 128, (c) control bandwidth to avoid large fluctuations in demand that affect overall network access from the user network 104 to services and/or content available indirectly or directly on the wide area network 144. Advantageously, central access and control of such services at gateway printer 120 provides rapid and secure access to users of the users network 104 to document services offered by service providers 150.

### A.4 Public Key Infrastructure

One embodiment of the operating environment 100 also includes a public key infrastructure (PKI). In the PKI, typically a certificate authority 156 or a trusted third party is used to sign digital certificates 122, 136, and 154 issued to the printer gateway 120, the service registry 138, and the service provider 150, respectively. In one embodiment, the trusted third party is the service registry 138 and thereby acts as a certificate authority for the gateway printer(s) 120 and the service provider(s) 150. The public key infrastructure permits two parties to dynamically establish secure communications with each other without ever having a prior relationship through the use of a digital certificate.

It will be appreciated that digital certificates may for example be in the form described by the ITU X.509 digital certificate standard, which is mirrored in IETF (Internet Engineering Task Force) RFC (Request For Comment) 2459; alternatively, digital certificates may be in form described in the WTLS (Wireless Transport Layer Security) security layer of WAP (Wireless Application Protocol) described in publications on the Internet at wapforum.org, or in the form of SPKI (Simple Public Key Infrastructure) certificates. Also it will be appreciated that alternative encryptions schemes besides RSA (Rivest-Shamir-Adleman) public key encryption technology may be used to carry out the invention, such as elliptic curve cryptography or the Digital Signature Algorithm (DSA) forming part of the U.S. Digital Signature Standard (DSS).

It will be further appreciated that one or more certificate authorities may be used in the operating environment 100. For example, the registrar network 134 may have its own certificate authority that services certificates issued to authorized users of the user network 104, or some or all of the parties (e.g., gateway printer(s) 120 and service provider(s) 150) may obtain certificates from a recognized public certificate service bureau (e.g., Verisign®). Finally, it will be appreciated by one skilled in the art that as the service registries, gateway printers, and service providers recognize entities to trust based on their keys, rather than who signed their digital certificates, and that arbitrary certificates, such as self-signed certificates (i.e., where the party, such as the service registry, to which the key pair belongs acts as its own certificate authority), or even unsigned public keys in isolation, may alternatively be used.

When two parties (e.g., gateway printer 120 and service registry 138) exchange their public keys and combine them with their respective private keys, both parties can agree on a symmetric secret key for a particular communications session (i.e., a session key). The session key is used to encrypt and decrypt information transmitted between the parties over an insecure (i.e., untrusted) communication channel. This manner of defining a session key does not permit an eavesdropper to deduce the session key by observing the communication channel over which the parties communicate.

One protocol for transmitting data securely over an insecure communications channel in this manner is defined in the Secure Socket Layer (SSL) protocol, as published in "The SSL Protocol Version 3.0", dated March 4, 1996. In an alternate embodiment the Internet Engineering Task Force (IETF) standard entitled Transport Layer Security (TLS), which is based on SSL, may also be used to establish a secure session over the Internet. TLS is described in IETF RFC 2246. The SSL 3.0 protocol and the TLS protocol, which are supported by standard web browsers, are invoked as part of the HyperText Transfer Protocol (HTTP) using the "https" extension.

In accordance with one aspect of public key infrastructures, the service registry 138, the service provider 150, and the gateway printer 120 are adapted to generate digital signatures of selected content. A digital signature is a signed cryptographic digest of the selected content using a given private key. Anyone with the public key corresponding to the given private key can verify the authenticity of the signed cryptographic digest. In accordance with another aspect of public key infrastructures, the service registry 138, the service provider 150, and the gateway printer 120 are adapted to define a session key for each communication session (i.e., secure session) that are established between each other.

In summary, the operating environment 100 in one embodiment may carry out web services using the SSL protocol which usually complemented with the use of digital certificates, digital signatures, and authentication within XML documents that are used as the format for formalizing message exchanges. In this way, secured transactions may take place that may be authenticated using a PKI and possibly encrypted using protocols embodied in the https extension. That is, digital certificates may be used to guarantee reciprocal authenticity and non repudiation. Also, digital certificates may be used to perform encryption tasks using the SSL protocol.

In addition by using the public key infrastructure, it will be appreciated that the following advantages are realized in the operating environment 100: (a) service providers may be trusted to process documents having a confidential status; (b) gateway printers may have preinstalled digital certificates (that may be validated/activated after purchase) thereby allowing the service registry (associated with the entity preinstalling the digital certificate) to trust such certificates once activated (at which point the gateway printer may communicate by signing its messages with document service providers and/or service registry) and thereby better identify the service requestor, track service requests and solve service billing issues; (c) the service providers may limit to a subset of available services according to functions available at printers or according its class or mark (e.g., trademark, service mark, etc.) of printer; (d) the service registry may limit access to a subset of available service providers according to functions available at the gateway printers; and (e) ensure service providers that document service requests are being made from a class or mark of printers.

### B. Methods Of Operation

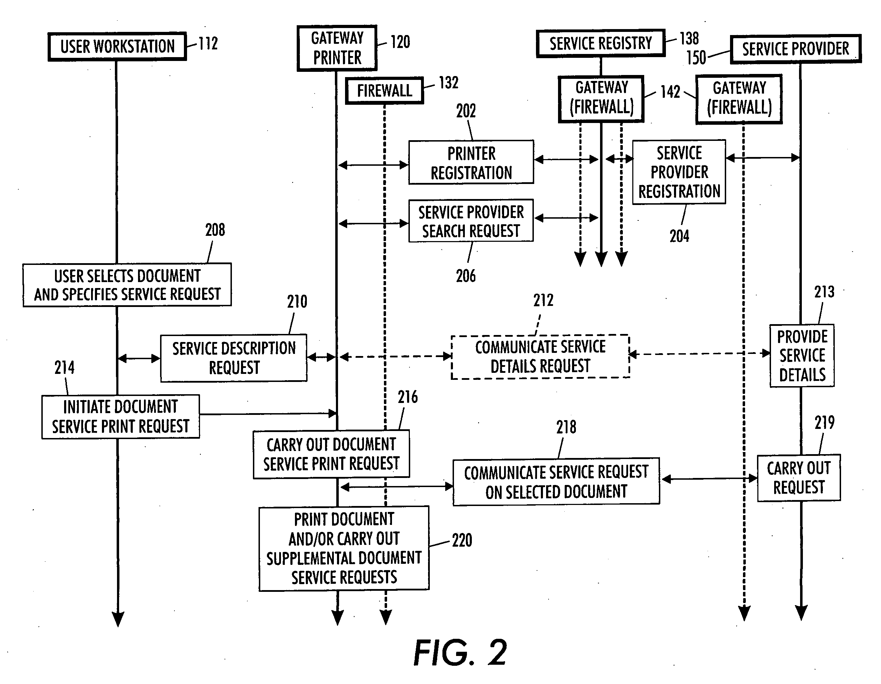

Figure 2 is a flow diagram of operations performed in one embodiment by the gateway printer 120 shown in Figure 1 in carrying out a document service print request. Before a document service print request may be initiated at 208 by a client device such as user workstation 112 (or user mobile device 106), the gateway printer 120 and the service provider(s) 150 should be registered at the service registry 138. Registration of the printer gateway 120 at the service registry 138 is performed at 202, at the conclusion of which the gateway printer 120 records in memory 128 the service registry's public key and the service registry 138 records in memory 140 the gateway printer's public key. Registration of the service provider 150 at the service registry 138 is performed at 204, at the conclusion of which the service provider 150 records in memory 148 the service registry's public key and the service registry records in memory 141 the service provider's public key.

Upon completion of registration at 202 and 204, the gateway printer 120 inquires from the service registry of registered services at 206. The request at 206 may concern all service providers or a limited category of services offered by the registered service providers. At the conclusion of the document service search request at 206, the gateway printer 120 records in memory 128, the public key of the service provider 150 (as well as other registered service providers). The gateway printer 122 may acquire other service provider information recorded in memory at 128 (e.g., the features and specifications of the document service provided, the fees associated with a document service request, and reference cites) directly from the service registry 138 or indirectly from the service provider 150. Subsequent to its initial query at 206, the gateway printer 120 may periodically query the service registry 138 for updates to existing or newly available document services and/or service providers).

The registration of available services by a service provider 150 at 204 may be initiated by either the service registry 138 or the service provider 150. In one embodiment at 204, the service provider 150 publishes available document services to the service registry 138 using a normalized service language known as Universal Description Discovery and Integration (UDDI). The interaction between the service provider 150 and the service registry 138 at 204 is performed independent of the gateway printer (or client) 120. The interaction between the printer gateway 120 and the service registry 138 for identifying available services at 206 may be carried out using a UDDI request that will be answered with a list of methods that the service provider has made available and the parameters needed by the gateway printer (or client) to submit a request to the service provider. The operations performed at 206, consist a negotiation phase for carrying out the bind interaction in which the printer gateway (i.e., the client for services) asks the service provider 150, directly or indirectly, through the service registry 138 for the manner in which to communicate requests for services and for details thereof (performed at 212 and 218). For example, such details include message formatting and parameter specification.

In one embodiment, the gateway printer 120 registers only with the service registry 138, which is affiliated with the vendor of the gateway printer 120 as it for example may offer, distribute or recommend the gateway printer for sale. Alternatively, the gateway printer 120 may repeat operations performed at 202 and 206 with any number of service registries 138 (that are not necessarily associated with the printer gateway). Similarity, depending on the arrangement between the service provider 150 and the service registry 138, the service provider 150 may register its available document services with one or more service registrys.

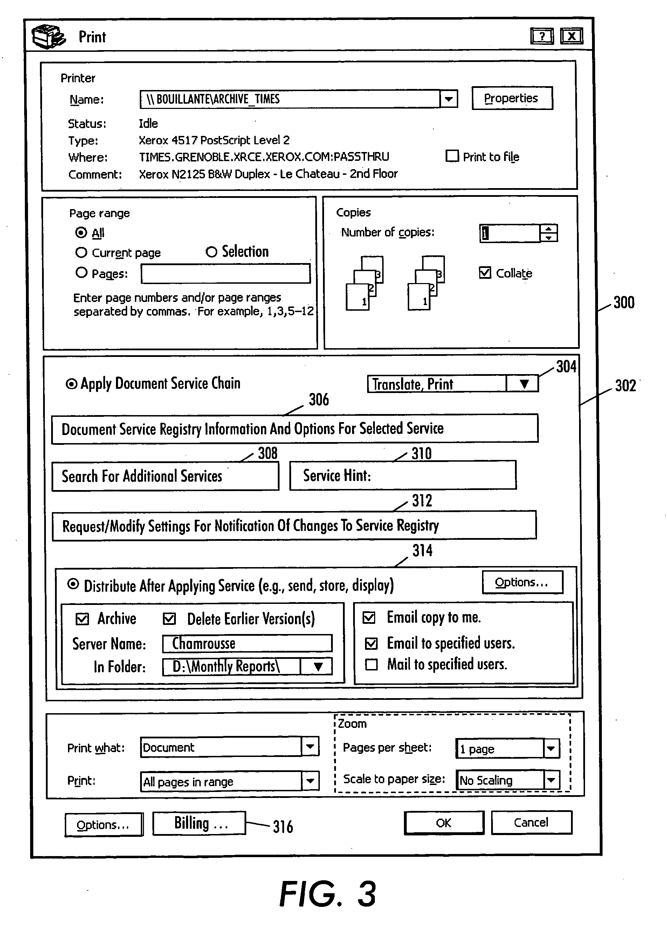

At 208, a document service print request is initiated in one embodiment when a user (operating for example a client device, such as workstation 112, mobile device 106, scanner 116 (e.g., scan-to-print), or multifunction device 114) selects an electronic document (originally in electronic form or scanned from a hardcopy document) and request the electronic document to be printed using a conventional print client. Figure 3 illustrates a user interface that appears upon initiating a document service for the selected document at the gateway printer 112. More specifically, Figure 3 illustrates a graphical user interface 300 for accessing at 302 document services available from the gateway printer 112. In one embodiment, the graphical user interface (GUI) 300 is the GUI of the gateway printer's print driver. However, unlike conventional GUI's of print drivers, the GUI 300 enables access to services not immediately available or offered indirectly or directly by the printer. In accordance with this feature, the GUI 300 allows a user to search for and/or arrange the process ordering of desired document services offered by one or more service providers (as for enabled at 308 and 310 in the GUI 300).

A user may specify from document service directory 304 a chain of one or more document services (using for example the document service request workflow as described in U.S. Patent Application Serial No. 10/605,874), wherein one or more of the services may be a print service. For example, the document service chain specified in Figure 3 includes translation and then printing. Alternatively, the document service chain could specify, for example, simply translation, or printing and then translation, or alternatively, printing, translation, and then printing (again). The chain of document services may include services offered by one or more service providers 150 in combination with the services offered by the gateway printer. For example, translation may be offered by one service provider and format conversion by another service provider.

Before selecting services from directory 304 in the user interface 300 shown in Figure 3, a user may carry out a service description request at 306 for additional information concerning the selected document services (i.e., cost, input format, output format, etc.). Alternatively, a user may search for an additional service or chain of services at 308 by providing a hint at 310. When either document service request is initiated by a user a query is sent to the gateway printer 120, at 210. A request is redirected by the gateway printer 120 to the service provider 150 concerned at 212 (which is carried out at 213 by the service provider) if the desired information is not cached in the memory 128 of the gateway printer 120.

In one embodiment, the service requests performed at 210 and 212 are performed synchronously. That is, the service provider 150 may interact directly with the user workstation 112 by means of the printer's driver interface 300 in Figure 3 (or even a dedicated client of the service provider) in which the parameters of the print request are reviewed by the user workstation to correct ambiguities identified by the service provider so as process the document service request in a preferred way. The information exchanges containing "detail requests" may follow a protocol particular to each service based on XML message formats.

Once a document service request is specified at 208 and any service description requests carried out at 210, the user initiates the document service request at 214. In addition, the user may specify at 314 in the user interface 300 whether and how the gateway printer 120 is to distribute (e.g., by storing results at a file server and/or by sending results by email, mail, fax, etc.) results after completing user specified document service requests has been completed at 220. At 216, the gateway printer carries out the specified document service print request on selected document, which may include performing one or more document service requests on the selected document at the service provider 150 (or possibly additional service providers).

In one embodiment, the gateway printer 120 communicates at 218 a document service request in the form of a print request, which is carried out by the service provider 150 at 219. Initiating a document service print request at 214 in this embodiment involves producing a print ready document as would any conventional print driver. The print ready document may for example be defined using any conventional Page Description Language (PDL) such as Postscript, thereby preserving formatting in the original document. The service provider 150 may accept from the gateway printer the document in a print ready format and output a corresponding or similar format.

More specifically, user parameters concerning document services defined in window 302 in Figure 3 may be embedded as parameters and options in the print ready document defined using a PDL. Generally, PDL are extensible and support the addition of proprietary parameters that are intended to be read only by a class of devices or services. For example, parameters may be defined that describe for example, a translation language, which would be ignored by a conventional printer not adapted to perform the service.

Once the gateway printer 120 receives a completed document service request carried out on the identified document, the gateway printer completes any printing requests and/or supplemental document services such as any archival or delivery services, at 220. Print requests may be carried out using an initial (i.e., before document service requests are carried out), final (i.e., after document service requests are carried out), or an intermediate (i.e., between document service request) document format.

In one embodiment at 216, the gateway printer 120 consumes print ready files in known PDL formats containing document content and specified service options (i.e., document service requests). In this embodiment, the gateway printer 120 receives a print ready file, it extracts any options directed at document service requests (e.g., defined at 302 in Figure 3) from the PDL file and builds an XML message in which the PDL file is attached for each individual document service request specified by the user. If the PDL file is transmitted as it was received by the gateway printer, each service provider may check the options specified in the XML message by the gateway printer.

In another embodiment, print submissions to the gateway printer 120 are made through the print server 118 to allow centralized administration and billing for all print job. In one embodiment, the digital certificates are used to allow the gateway printer 120, the service registry 138, and the service provider 150 to validate billing information concerning document service requests. In the event, submissions are made to the gateway printer 120 in a conventional PDL format, these submissions may be administered no differently than any other conventional print request. In addition, because print jobs may have a significant size, the print server and/or gateway printer may enforce limits on the bandwidth used by the gateway printer to transfer the document to the service provider. In one embodiment, the gateway printer allows its administrators to setup a "maximum throughput" for document service requests in order to avoid interfering with other demands of the bandwidth available on the user network 104.

Once the service request has been transmitted to the service provider 150 at 218, the service provider 150 may deliver the completed document service in a plurality of ways. The user may receive a digital document or a hardcopy as output from the service provider, depending on the service requested which may involve a document transformation, rendering, or personalization. In one embodiment, the service provider may return the completed service request over the same channel at 218 over which the document service request was made (i.e., synchronously).

Alternatively, a completed service request may be delivered over a channel that is independent of the document service request, such as electronic mail, facsimile, and surface mail (i.e., asynchronously). In another embodiment not shown, the user workstation 112 may synchronously communicate at 214, 216, and 218 with the service provider (e.g., when the user submits a print request). In this alternate embodiment, the user computer may be given the ability to interact directly with the service provider 150 to receive document service request results and provide feedback and/or additional input for completing the document service results.

As shown at 212 and 218 in Figure 2, the gateway printer 120 acts as a proxy service for information requests and service requests that are made to the service provider 150. Its proxy function includes a cache for service provider information 128 from one or more service registries 138. Registration of available document services in the cache may be static (e.g., preset at the factory, thereby limiting the service registry to a single "product" service registry that may be maintained, for example, by the product manufacturer) or dynamic (e.g., through product registration). More specifically in its role as a proxy server, the gateway printer 120 may: (a) interrogate periodically service registries 138 at a predefined interval to retrieve updated information concerning new or updated document services; (b) preserve bandwidth and decrease the latency a user experiences to access services or service information on the user network 104 as it caches the service provider information in its memory 128; (c) control bandwidth of data flowing over the document service request channel so that document service requests do not negatively impact other channels through the gateway.

In controlling the bandwidth at the gateway for document service requests made through the GUI 300 shown in Figure 3, the gateway printer may provide the following filtering functions: (a) a coarse filter that takes into account the service preferences set by system administrators for the user local area network 104 in which the gateway printer is installed (such service preferences may filter those services offered for example by the printer manufacturer that are of interest to the community of users in the user network 104); (b) a fine grain filter that studies services offered to users of the user network 104 and their usage patterns to identify and locate the ability of better performing, supplemental, or complementary services; and (c) user input from queries performed at 308/310 for available services and/or requests/modification of the service registry at 312 (e.g., what document services to add, remove, watch for, etc.).

In one embodiment, such filtering functions are carried out using a recommender system. Recommender systems may pro-actively locate such items on the user's behalf, then "recommend" these items for the user's attention. These systems, such as the Xerox "Knowledge Pump" (see for example, "Knowledge Pump: Supporting the Flow and Use of Knowledge", by Glance et al., in: Springer Verlag, Borghoff, U. and Pareschi, R. (Eds), Information Technology for Knowledge Management, 1998, which is incorporated herein by reference), use representations of user "interests" to determine the relevance of information items to each user. In this embodiment, the recommender system might continually scan for new document services available at service providers or solicit notices of new or changed services at document service providers. If a new service "matches" (part of) a user's interest representation, the user is notified in some way by, for example, being sent a description (or a link to a description) of the new or changed service automatically and requested if the service should be one that is made available at the gateway printer. Further, the recommender system may solicit or the user may provide recommendations at 312 in the print request interface shown in Figure 3. Depending on the recommendations by users and/or service providers, the gateway printer decides whether to add and remove document services in the list of service provider information 128.

In one embodiment, users operating client systems (such as workstation 112) may stay current with updates made to the service provider information 128 by requesting notifications (e.g., over email) of changes to the service registry at 312 in Figure 3. Further, users may access service provider information in the cache 128 of the gateway printer 120 concerning available features of services retrieved from various service providers 150 and/or various service registries 138 by a gateway printer 120. Also, information for services that is not available in the cache 128 of the gateway printer may be requested and subsequently cached once requested by a user of the user network 104.

In another embodiment, users and/or system administrators may define a set of intelligent filtering parameters that are used by the gateway printer 120 to perform focused queries for specific types of document services that are later made available to users of the gateway printer. Alternatively, the service registry of the manufacturer of the gateway printer (or any other service registry communicating with the gateway printer) may provide an update mechanism that operates at the gateway printer and which automatically provides updates and/or news of additional document services available (as well as possibly updates to the physical device itself). Such update mechanisms may control the form and/or class of content and notices updated.

In addition, the gateway printer 120 may serve as a central billing facility for requested services. For example, billing information for one or more services may be specified at 316 in the user interface 300 shown in Figure 3. Further, the gateway printer 120 may include an additional cache at 128 that: (a) is user specific cache for recording user preference settings (such as preferred billing mode, delivery channel, delivery format, etc.); and (b) enables a user to browse and configure document service requests for later submission (such requests may take the form of a default or predefined "job ticket"). Generally, the additional cache at 128 storing user preferences should be of a smaller magnitude than the service provider information stored in the cache 128.

In an alternate embodiment, the bind interaction (i.e., service description retrieval) and service request submission are carried out at 218 in Figure 2. In this alternate embodiment, the bind interaction is not identified at 206. Alternatively, whether the bind interaction is performed at 206, 212, or 218 depends on the type of class of document service request. In one embodiment, the document service requests carried out at 212 takes place only after the user at a client device (such as workstation 112) has defined all details of the document service request directly with the gateway printer 120, thereby not requiring any interaction with the service provider 150 beforehand.

Information exchanges taking place between the user workstation 112 and the gateway printer 120 in Figure 2 may be made using XML formatted messages that are the base of protocols such as SOAP. When a document service print request is submitted to the gateway printer by the user workstation 112, the following consideration should be taken into account: (a) some proposed and/or requested services may require documents in formats other than a printer specific format (e.g., a page description language such as postscript); (b) document service accounting should follow typical print job account; (c) print-ready documents submitted to printers (e.g., in postscript) may consume a significant amount network bandwidth during transmission thereby warranting network bandwidth controls.

### D. Miscellaneous

It will be appreciated that numerous benefits may be realized from the invention for users (of document services), service providers, and printer manufacturers. For users, the gateway printer allows access through its print driver interface to multiple document services. That is, all document services offered by remote service providers may be accessed to users for a selected document in a manner as natural and functionally integrated as printing the document.

A further advantage is that the document service browsing and searching facility is integrated into the print driver interface. Also, with the two level cache architecture service provider information and user specific information a service's characteristics may be quickly retrieved. Advantageously in addition to the two level cache architecture, the gateway printer may in addition act as a service crawler delivering alerts when new services reflecting the user's preferences appear.

Yet a further advantage concerns personalized services or chains of personalized services that a user may define. More specifically, the user may advantageously chain services one after the other, configure them, and submit them as a service batch processes to the gateway printer and/or one or more service providers. In this way, users may build "virtual services" that are tailored to suite their needs.

When the gateway printer has embedded therein a digital certificate issued by its manufacturer, the user is provided with an additional level of security guaranteed by a third party independent from the service provider as the manufacturer may function as a certification authority. Given the static nature of a digital certificate embedded in a printer, tampering of malicious manipulation of it may be difficult to achieve.

Since many web services may provide results asynchronously, users are not expected to receive results immediately. The gateway printer may therefore readily control bandwidth transmission of documents to service providers with no perceived performance impact to the user while taking into account the limits that network administrators could set in order to manage an intranet's bandwidth usage.

Advantages for a service provider include an additional avenue through which it may publish its services. Further by publishing its services through a service registry of a printer manufacturer, the service provider is not required to specify a graphic user interface as one would already be specified by the printer manufacturer through its printer drivers. In addition, service providers are thus given a single access point from which to submit search requests. Also, service requests to service providers may be made for most document service applications using a print driver interface.

By managing its service registry and its registered users databases, a printer manufacturer becomes a participant in administering document services to users of its printing systems. The printer manufacturer may thereby control quality and/or availability of document services it allows to be registered in its service registry. For example, the printer manufacture may allow the registration of services that meet a certain standard of performance and/or quality, or that perform well at the class of printer through which the document service request is made. As an advantage to all parties, the printer manufacturer may charge both the users and the service providers on a pay-per-use basis or on a volume (e.g., quantity) use basis. It will be appreciated that pay-per-use may be better suited for individual users whereas payments based on the volume of services used may be better suited for service providers.

Using the foregoing specification, the invention may be implemented as a machine (or system), process (or method), or article of manufacture by using standard programming and/or engineering techniques to produce programming software, firmware, hardware, or any combination thereof. It will be appreciated by those skilled in the art that the flow diagrams described in the specification are meant to provide an understanding of different possible embodiments of the invention. As such, alternative ordering of the steps, performing one or more steps in parallel, and/or performing additional or fewer steps may be done in alternative embodiments of the invention.

Any resulting program(s), having computer-readable program code, may be embodied within one or more computer-usable media such as memory devices or transmitting devices, thereby making a computer program product or article of manufacture according to the invention. As such, the terms "article of manufacture" and "computer program product" as used herein are intended to encompass a computer program existent (permanently, temporarily, or transitorily) on any computer-usable medium such as on any memory device or in any transmitting device.

Executing program code directly from one medium, storing program code onto a medium, copying the code from one medium to another medium, transmitting the code using a transmitting device, or other equivalent acts may involve the use of a memory or transmitting device which only embodies program code transitorily as a preliminary or final step in making, using, or selling the invention.

Memory devices include, but are not limited to, fixed (hard) disk drives, floppy disks (or diskettes), optical disks, magnetic tape, semiconductor memories such as RAM, ROM, PROMs, etc. Transmitting devices include, but are not limited to, the Internet, intranets, electronic bulletin board and message/note exchanges, telephone/modem based network communication, hard-wired/cabled communication network, cellular communication, radio wave communication, satellite communication, and other stationary or mobile network systems/communication links.

A machine embodying the invention may involve one or more processing systems including, but not limited to, CPU, memory/storage devices, communication links, communication/transmitting devices, servers, I/O devices, or any subcomponents or individual parts of one or more processing systems, including software, firmware, hardware, or any combination or subcombination thereof, which embody the invention as set forth in the claims.

The mobile computing device 106 is adapted to establish at least one short-range connection with devices coupled to the user network 104. The short range connection may be established over RF (Radio Frequency) using, for example, a Bluetooth specification or 802.11 family (otherwise known as WiFi - Wireless Fidelity) compliant technology, or over IR (Infrared) using, for example, an IrDA (Infrared Data Association) standard compliant technology. Examples of mobile computing devices include: mobile phones, PDAs (Personal Digital Assistants), portable computers, communicators, portable cameras, etc. The mobile computing device 106 when coupled to network 104, such as the Internet, permits the user 108 to browse documents available on networks such as the World Wide Web (WWW).

To establish network connectivity in the user network 104, the mobile device 106 has embedded therein one or more transceivers for establishing one or more wireless (or hardwired) connections (or sessions) that may take place over one or more separate communication channels. A communication channel is defined using one or more protocols, such as for example, Bluetooth HCRP (Hardcopy Cable Replacement Profile), Bluetooth SPP (Serial Port Profile), Bluetooth LAP (LAN Access Profile), or Bluetooth BPP (Basic Printing Profile). The individual communication channels may be established between the mobile device 106 and a single computational device or a plurality of computational devices.

The multifunction device 114 may include one or more device specific capabilities for printing, scanning, faxing, and providing network access to registered and non-registered or guest users of the user network 104. These services may be offered for free or for fee depending on the nature and location where the services are offered. In addition, the multifunction device 114, as well as, the workstation 126, and scanner 116 may have embedded therein functionality for serving as a network access point. Generally, network access points serve as a bridge between short-range wireless connections with the mobile device 106 and the user network 104.

In addition, the mobile device 106 and the workstation 112 are adapted to store thereon one or more document references (e.g., URLs) and/or documents. The one or more document references and/or documents stored on the mobile device and the workstation may for example either be retrieved from a server or another mobile computing device or created directly thereon or identified while browsing documents on the WWW. In one embodiment, the contents of document references and documents accessed by the mobile device or the workstation are stored on the file server 118.

## Claims

1. In a wide area network coupling a first local area network having a service registry coupled thereto, a second local area network having a service provider coupled thereto, and a third local area network having a user operating a computer coupled thereto, a method for providing document services to the user operating the computer, comprising:
coupling a printer to the third local area network;
registering the printer with the service registry when the printer is a trusted printer of the service registry;
querying the service registry with the printer for document service providers that are registered with the service registry to define a list of available service providers that includes at least the service provider on the second local area network;
storing in a cache at the printer the list of available service providers together with details of available services that includes at least the service provider on the second local area network;
receiving at the printer a print request identifying a document to be printed;
presenting the user in response to the print request the list of the available services in the cache for augmenting the print request;
receiving at the printer the print request augmented with a service selected from the list of available services to perform on the identified document;
carrying out the augmented print request at the printer by communicating with the service provider on the second network providing the selected service.

2. The method according to claim 1, wherein the service registry includes a certificate authority for issuing digital certificates to the service registry, the printer, and the service provider.

3. The method according to claim 1, further comprising chaining together the service selected from the list of available services with another service selected from the list of available services.

4. The method according to claim 1, wherein services available at the service provider include a plurality of hardcopy and electronic document services.

5. The method according to claim 1, wherein the service provider on the second local area network defines the list of available services according to functions available at the printer.

6. The method according to claim 1, wherein the print request is specified at the computer coupled to the third local area network using a page description language.

7. The method according to claim 6, wherein the parameters of the print request augmented with the service selected from the list of available services are specified at the computer coupled to the third local area network using the page description language.

8. The method according to claim 7, further comprising transmitting from the printer the augmented print request specified using the page description language to the service provider coupled to the second local area network for carrying out the selected service.

9. A method for facilitating trusted access to document services, comprising:
enabling a printing system to communicate with a service registry;
registering at the service registry one or more service providers that each offer a set of document services;
responsive to receiving a product registration from the printing system at the service registry, issuing the printing system a digital certificate having a public key associated therewith;
responsive to receiving a request for available service providers and verifying the request is from the printing system using the public key, providing access to the set of document services and the public keys of the each of the one or more service providers; and
issuing each of the one or more service providers a digital certificate having a public key associated therewith and the public key of the printing system;
wherein the printing system provides access through print requests to ones of the set of document services using ones of the public keys of the one or more service providers that validate access using the public key of the printing system.

10. In a wide area network coupling a first local area network having a service registry coupled thereto, a second local area network having a service provider coupled thereto, and a third local area network having a user operating a computer coupled thereto, a method for providing document services to the user operating the computer, comprising:
coupling the wide area network and the third local area network with a gateway printer;
registering the gateway printer with the service registry when the gateway printer is a trusted printer of the service registry;
querying the service registry with the gateway printer for trusted document service providers that are registered with the service registry to define a list of available service providers that includes at least the service provider on the second local area network;
storing in a cache at the gateway printer the list of available service providers together with details of available services that includes at least the service provider on the second local area network;
receiving at the gateway printer a print request identifying a document to be printed;
presenting the user in response to the print request the list of the available services in the cache for augmenting the print request;
receiving at the gateway printer the print request augmented with a service selected from the list of available services to perform on the identified document;
carrying out the augmented print request at the gateway printer by communicating with the service provider on the second network providing the selected service.
